(19) Europäisches Patentamt
European Patent Office
Office européen des brevets

(11) **EP 1 838 740 B1**

(12) **EUROPÄISCHE PATENTSCHRIFT**

(45) Veröffentlichungstag und Bekanntmachung des Hinweises auf die Patenterteilung:
**27.06.2012 Patentblatt 2012/26**

(21) Anmeldenummer: **05820653.3**

(22) Anmeldetag: **31.12.2005**

(51) Int Cl.:
***C08F 2/44*** *(2006.01)* ***C08K 3/00*** *(2006.01)*
***C08F 2/24*** *(2006.01)* ***C08F 292/00*** *(2006.01)*
***C08L 51/10*** *(2006.01)*

(86) Internationale Anmeldenummer:
**PCT/EP2005/014160**

(87) Internationale Veröffentlichungsnummer:
**WO 2006/072464 (13.07.2006 Gazette 2006/28)**

(54) **VERFAHREN ZUR HERSTELLUNG WÄSSRIGER KOMPOSITPARTIKEL-DISPERSIONEN**
METHOD FOR PRODUCING AQUEOUS COMPOSITE PARTICLE DISPERSIONS
PROCEDE DE PRODUCTION DE DISPERSIONS AQUEUSES DE PARTICULES COMPOSITES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **06.01.2005 DE 102005000918**

(43) Veröffentlichungstag der Anmeldung:
**03.10.2007 Patentblatt 2007/40**

(73) Patentinhaber: **BASF SE**
**67056 Ludwigshafen (DE)**

(72) Erfinder: **WIESE, Harm**
**69121 Heidelberg (DE)**

(56) Entgegenhaltungen:
**WO-A-01/18081 WO-A-03/000760**

- **PATENT ABSTRACTS OF JAPAN Bd. 2003, Nr. 12, 5. Dezember 2003 (2003-12-05) & JP 2003 238630 A (KONICA CORP), 27. August 2003 (2003-08-27)**
- **PATENT ABSTRACTS OF JAPAN Bd. 1997, Nr. 04, 30. April 1997 (1997-04-30) & JP 08 325314 A (JAPAN SYNTHETIC RUBBER CO LTD), 10. Dezember 1996 (1996-12-10)**

Bemerkungen:
Die Akte enthält technische Angaben, die nach dem Eingang der Anmeldung eingereicht wurden und die nicht in dieser Patentschrift enthalten sind.

EP 1 838 740 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Gegenstand der vorliegenden Erfindung ist ein Verfahren zur Herstellung einer wässrigen Dispersion von aus Polymerisat und feinteiligem anorganischem Feststoff aufgebauten Partikeln (Kompositpartikel), bei dem ethylenisch ungesättigte Monomere in wässrigem Medium dispers verteilt und mittels wenigstens eines radikalischen Polymerisationsinitiators im Beisein wenigstens eines dispers verteilten, feintelligen anorganischen Feststoffes und wenigstens eines Dispergiermittels nach der Methode der radi-kalisch wässrigen Emulsionspolymerisation polymerisiert werden, welches dadurch gekennzeichnet ist, dass als ethylenisch ungesättigte Monomere eine Monomerenmischung eingesetzt wird, welche aus ethylenisch ungesättigten Monomeren A und zu > 0 und ≤ 10 Gew.-% wenigstens eines, eine Epoxidgruppe aufweisenden ethylenisch ungesättigten Monomeren B (Epoxidmonomer) besteht und dass

a) eine stabile wässrige Dispersion des wenigstens einen anorganischen Feststoffes eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen Durchmesser ≤ 100 nm, ermittelt über die Methode der Analytischen Ultrazentrifuge, aufweisen,

b) die dispergierten Feststoffteilchen des wenigstens einen anorganischen Feststoffs in einer wässrigen Standardkaliumchlorid-Lösung bei einem pH-Wert, der dem pH-Wert des wässrigen Reaktionsmediums vor Beginn der Zugabe der Dispergiermittel entspricht, eine von Null verschiedene elektrophoretische Mobilität zeigen,

c) die wässrige Feststoffteilchendispersion vor Beginn der Zugabe der Monomerenmischung mit wenigstens einem anionischen, kationischen und nichtionischen Dispergiermittel versetzt wird,

d) danach 0,01 bis 30 Gew.-% der Gesamtmenge der Monomerenmischung der wässrigen Feststoffteifchendispersion zugesetzt und bis zu einem Umsatz von wenigstens 90 % polymerisiert wird
und

e) daran anschließend die Restmenge der Monomerenmischung unter Polymerisationsbedingungen nach Maßgabe des Verbrauchs kontinuierlich zugegeben wird.

Für die vorliegende Erfindung ist von folgendem Stand der Technik auszugehen.

Die japanische Offenlegungsschrift JP-A 325314 offenbart ein spezielles Miniemulsions-Verfahren zur Herstellung wässriger Kompositpartikel-Dispersionen. Charakterisiert ist dieses Miniemulsions-Verfahren durch das Eindispergieren anorganischer Feststoffteilchen in ethylenisch ungesättigte Monomere, enthaltend einen öllöslichen Radikalinitiator, Überführen dieser Monomermischung in Monomermischungs-Tröpfchen < 0,1 $\mu$m in einem wässrigen Medium mittels einer hydrophobierten porösen Membran und Auspolymerisation dieser Monomermischungs-Tröpfchen unter Erhalt einer wässrigen Kompositpartikel-Dispersion. In den Beispielen wurden zur Herstellung der wässrigen Kompositpartikel-Dispersionen glycidylmethacrylathaltige Monomerenmischungen eingesetzt.

Zeng et al. offenbaren in Journal of Polymer Science: Part A: Polymer Chemistry, Vol. 42, Seiten 2253 bis 2262, die Herstellung von wässrigen Kompositpartikel-Dispersionen, deren Kompositpartikel eine Kern/Schale-Struktur aufweisen. Kernpunkt vorgenannter Veröffentlichung ist die Emulsionspolymerisation von Styrol in Anwesenheit von speziell oberflächenbehandelten Siliziumdioxidteilchen. In einer nachfolgenden zweiten Stufe werden die erhaltenen Polystyrol/Siliziumdioxid-Kompositpartikel mit Glycidylmethacrylat gepfropft. Nach Abschluss der Emulsionspolymerisation wird das Kern/Schale-Polymer durch Zugabe von wässriger Aluminium-(III)-chlorid-Lösung ausgefällt. Die Herstellung von Polymerfilmen wird nicht offenbart

Die WO 0118081 offenbart ein spezielles Verfahren zur Herstellung von wässrigen Kompositpartikel-Dispersionen. In den Beispielen findet sich der Vergleich eines Kompositfilms, hergestellt aus einer wässrigen Kompositpartikel-Dispersion mit Polymerisatfilmen, hergestellt aus einer wässrigen Polymerdispersion mit identischer Polymerisatzusammensetzung wie in den Kompositpartikeln bzw. identischer wässriger Polymerisatdispersion, der identische Mengen an feintelligem anorganischem Feststoff zugemischt wurde wie bei der Herstellung der wässrigen Kompositpartikel-Dispersion. Dabei erwies sich der aus der wässrigen Kompositpartikel-Dispersion zugängliche Kompositfilm als härter als der der Vergleichsdispersionen. Auch die Wasseraufnahme war deutlich geringer. Dabei wies jedoch das den Kompositpartikeln zugrunde liegende Polymerisat keinerlei Epoxidgruppen auf.

Aufgabe der vorliegenden Erfindung war die Bereitstellung von wässrigen Kompositpartikel-Dispersionen, deren die feinteiligen anorganischen Feststoffe enthaltenden Polymerisatfilme (Kompositfilme) eine erhöhte Bruchspannung aufweisen.

Dementsprechend wurde das eingangs definierte Verfahren gefunden.

Kompositpartikel, welche aus Polymerisat und feinteiligem anorganischem Feststoff aufgebaut sind, insbesondere in Form ihrer wässrigen Dispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix und feinteiligem anorganischen Feststoff aufgebaute Partikel in disperser Verteilung befindlich enthalten. Der mittlere, Durchmesser der Kompositpartikel liegt in der Regel im Bereich ≥ 10 nm und ≤ 1000 nm, oft im Bereich ≥ 50 nm und ≤ 400 nm und häufig im Bereich > 100 nm und ≤ 300 nm.

Kompositpartikel und Verfahren zu ihrer Herstellung in Form von wässrigen Kompositpartikel-Dispersionen sowie deren Verwendung sind dem Fachmann bekannt und beispielsweise in den Schriften US-A 3,544,500, US-A 4,421,680, US-A 4,608,401, US-A 4,981,882, EP-A 104 498, EP-A 505 230, EP-A 572 128, GB-A 2 227 739, WO 0118081, WO 0129106, WO 03000760 sowie in Long et al., Tianjin Daxue Xuebao 1991, 4, Seiten 10 bis 15, Bourgeat-Lami et al., Die Angewandte Makromolekulare Chemie 1996, 242, Seiten 105 bis 122, Paulke et al., Synthesis Studies of Paramagnetic Polystyrene Latex Particles in Scientific and Clinical Applications of Magnetic Carriers, Seiten 69 bis 76, Plenum Press, New York, 1997, Armes et al., Advanced Materials 1999, 11, Nr. 5, Seiten 408 bis 410, offenbart.

Die für das erfindungsgemäße Verfahren vorteilhaft anwendbare Verfahrensweise ist in der WO 03000760 offenbart - auf welche im Rahmen dieser Schrift ausdrücklich Bezug genommen werden soll. Dieses Verfahren zeichnet sich dadurch aus, dass die Monomerenmischung in wässrigem Medium dispers verteilt und mittels wenigstens eines radikalischen Polymerisationsinitiators im Beisein wenigstens eines dispers verteilten, feinteiligen anorganischen Feststoffs und wenigstens eines Dispergiermittels nach der Methode der radikalisch wässrigen Emulsionspolymerisation polymerisiert wird, wobei

a) eine stabile wässrige Dispersion des wenigstens einen anorganischen Feststoffs eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen gewichtsmittleren Durchmesser ≤ 100 nm aufweisen,

b) die dispergierten Feststoffteilchen des wenigstens einen anorganischen Feststoffs in einer wässrigen Standardkaliumchlorid-Lösung bei einem pH-Wert, der dem pH-Wert des wässrigen Dispergiermediums vor Beginn der Zugabe der Dispergiermittel entspricht, eine von Null verschiedene elektrophoretische Mobilität zeigen,

c) die wässrige Feststoffteilchendispersion vor Beginn der Zugabe der Monomerenmischung mit wenigstens einem anionischen, kationischen und nichtionischen Dispergiermittel versetzt wird,

d) danach von der Gesamtmenge der Monomerenmischung 0,01 bis 30 Gew.-% der wässrigen Feststoffteilchendispersion zugesetzt und bis zu einem Umsatz von wenigstens 90 % polymerisiert werden
und

e) daran anschließend die Restmenge der Monomerenmischung unter Polymerisationsbedingungen nach Maßgabe des Verbrauchs kontinuierlich zugegeben wird.

Für dieses Verfahren sind alle diejenigen feinteiligen anorganischen Feststoffe geeignet, welche stabile wässrige Dispersionen ausbilden, die bei einer Anfangsfeststoffkonzentration von ≥ 1 Gew.-%, bezogen auf die wässrige Dispersion des wenigstens einen anorganischen Feststoffs, noch eine Stunde nach ihrer Herstellung ohne Rühren oder Schütteln mehr als 90 Gew.-% des ursprünglich dispergierten Feststoffes in dispergierter Form enthalten und deren dispergierten Feststoffteilchen einen Durchmesser ≤ 100 nm aufweisen und darüber hinaus bei einem pH-Wert, der dem pH-Wert des wässrigen Reaktionsmediums vor Beginn der Zugabe der Dispergiermittel entspricht, eine von Null verschiedene elektrophoretische Mobilität zeigen.

Die quantitative Bestimmung der Anfangsfeststoffkonzentration und der Feststoffkonzentration nach einer Stunde sowie die Ermittlung der Teilchendurchmesser erfolgt über die Methode der Analytischen Ultrazentrifuge (vgl. hierzu S. E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Die bei den Teilchendurchmesser angegebenen Werte entsprechen den sogenannten $d_{50}$-Werten.

Die Methode zur Bestimmung der elektrophoretischen Mobilität ist dem Fachmann bekannt (vgl. z. B. R. J. Hunter, Introduction to modern Colloid Science, Kapitel 8.4, Seiten 241 bis 248, Oxford University Press, Oxford, 1993 sowie K. Oka und K. Furusawa, in Electrical Phenomena at Interfaces, Surfactant Science Series, Vol. 76, Kapitel 8, Seiten 151 bis 232, Marcel Dekker, New York, 1998). Die elektrophoretische Mobilität der im wässrigen Reaktionsmedium

dispergierten Feststoffteilchen wird mittels eines handelsüblichen Elektrophoresegeräts, wie beispielsweise dem Zetasizer 3000 der Fa. Malvern Instruments Ltd., bei 20 °C und 1 bar (absolut) bestimmt. Hierzu wird die wässrige Feststoffteilchendispersion mit einer pH-neutralen 10 millimolaren (mM) wässrigen Kaliumchlorid-Lösung (Standardkaliumchlorid-Lösung) soweit verdünnt, dass die Feststoffteilchen-Konzentration ca. 50 bis 100 mg/l beträgt. Die Einstellung der Meßprobe auf den pH-Wert, den das wässrige Reaktionsmedium vor Beginn der Zugabe der Dispergiermittel aufweist, erfolgt mittels der gängigen anorganischen Säuren, wie beispielsweise verdünnte Salzsäure oder Salpetersäure oder Basen, wie beispielsweise verdünnte Natronlauge oder Kalilauge. Die Wanderung der dispergierten Feststoffteilchen im elektrischen Feld wird mittels der sogenannten elektrophoretischen Lichtstreuung detektiert (vgl. z. B. B. R. Ware und W. H. Flygare, Chem. Phys. Lett. 1971, 12, Seiten 81 bis 85). Dabei wird das Vorzeichen der elektrophoretischen Mobilität durch die Wanderungsrichtung der dispergierten Feststoffteilchen definiert, d. h. wandern die dispergierten Feststoffteilchen zur Kathode, ist deren elektrophoretische Mobilität positiv, wandern sie dagegen zur Anode, ist sie negativ.

Ein geeigneter Parameter, um die elektrophoretische Mobilität von dispergierten Feststoffteilchen in einem gewissen Umfang zu beinflussen oder einzustellen, ist der pH-Wert des wässrigen Reaktionsmediums. Durch Protonierung bzw. Deprotonierung der dispergierten Feststoffteilchen wird die elektrophoretische Mobilität im sauren pH-Bereich (pH-Wert < 7) in positiver und im alkalischen Bereich (pH-Wert > 7) in negativer Richtung verändert. Ein für das in der WO 03000760 offenbarte Verfahren geeigneter pH-Bereich ist der, innerhalb dessen sich eine radikalisch initiierte wässrige Emulsionspolymerisation durchführen lässt. Dieser pH-Bereich liegt in der Regel bei pH 1 bis 12, häufig bei pH 1,5 bis 11 und oft bei pH 2 bis 10.

Der pH-Wert des wässrigen Reaktionsmediums kann mittels handelsüblicher Säuren, wie beispielsweise verdünnte Salz-, Salpeter- oder Schwefelsäure oder Basen, wie beispielsweise verdünnte Natron- oder Kalilauge, eingestellt werden. Häufig ist es günstig, wenn eine Teil- oder die Gesamtmenge der zur pH-Einstellung verwendeten Säure- oder Basenmenge dem wässrigen Reaktionsmedium vor dem wenigstens einen feinteiligen anorganischen Feststoff zugesetzt wird.

Vorteilhaft für das gemäß WO 03000760 offenbarte Verfahren ist, dass bezogen auf 100 Gew.-Teile Monomerenmischung 1 bis 1000 Gew.-Teile des feinteiligen anorganischen Feststoffs eigesetzt werden und, dass dann, wenn die dispergierten Feststoffteilchen unter den vorgenannten pH-Bedingungen

- eine elektrophoretische Mobilität mit negativem Vorzeichen aufweisen, 0,01 bis 10 Gew.-Teile, bevorzugt 0,05 bis 5 Gew.-Teile und insbesondere bevorzugt 0,1 bis 3 Gew.-Teile wenigstens eines kationischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein anionisches Dispergiermittel eingesetzt werden, wobei dessen Menge so bemessen wird, dass das äquivalente Verhältnis von anionischem zu kationischem Dispergiermittel größer 1 ist, oder

- eine elektrophoretische Mobilität mit positivem Vorzeichen aufweisen, 0,01 bis 10 Gew.-Teile, bevorzugt 0,05 bis 5 Gew.-Teile und insbesondere bevorzugt 0,1 bis 3 Gew.-Teile wenigstens eines anionischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein kationisches Dispergiermittel eingesetzt werden, wobei dessen Menge so bemessen wird, dass das äquivalente Verhältnis von kationischem zu anionischem Dispergiermittel größer 1 ist.

Unter äquivalentem Verhältnis von anionischem zu kationischem Dispergiermittel wird das Verhältnis der eingesetzten Molzahl des anionischen Dispergiermittels multipliziert mit der Anzahl der pro Mol des anionischen Dispergiermittels enthaltenen anionischen Gruppen dividiert durch die eingesetzte Molzahl des kationischen Dispergiermittels multipliziert mit der Anzahl der pro Mol des kationischen Dispergiermittels enthaltenen kationischen Gruppen verstanden. Entsprechendes gilt für das äquivalente Verhältnis von kationischem zu anionischem Dispergiermittel.

Die Gesamtmenge des gemäß der WO 03000760 verwendeten wenigstens einen anionischen, kationischen und nichtionischen Dispergiermittels kann in der wässrigen Feststoffdispersion vorgelegt werden. Es ist jedoch auch möglich, lediglich eine Teilmenge der genannten Dispergiermittel, in der wässrigen Feststoffdispersion vorzulegen und die verbliebenen Restmengen während der radikalischen Emulsionspolymerisation kontinuierlich oder diskontinuierlich zuzugeben. Verfahrenswesentlich ist jedoch, dass vor und während der radikalisch initiierten Emulsionspolymerisation das vorgenannte äquivalente Verhältnis von anionischem und kationischem Dispergiermittel in Abhängigkeit vom elektrophoretischen Vorzeichen des feinteiligen Feststoffs aufrechterhalten wird. Werden daher anorganische Feststoffteilchen eingesetzt, welche unter den vorgenannten pH-Bedingungen eine elektrophoretische Mobilität mit negativem Vorzeichen aufweisen, so muss das äquivalente Verhältnis von anionischem zu kationischem Dispergiermittel während der gesamten Emulsionspolymerisation größer 1 sein. In entsprechender Weise muss bei anorganischen Feststoffteilchen mit einer elektrophoretischen Mobilität mit positivem Vorzeichen das äquivalente Verhältnis von kationischem zu anionischem Dispergiermittel während der gesamten Emulsionspolymerisation größer 1 sein. Günstig ist es, wenn die äquivalenten Verhältnisse ≥ 2, ≥ 3, ≥ 4, ≥ 5, ≥ 6, ≥ 7, oder ≥ 10 sind, wobei die äquivalenten Verhältnisse im Bereich zwischen 2 und 5 besonders günstig sind.

Für das in der WO 03000760 offenbarte Verfahren einsetzbare feinteilige anorganische Feststoffe sind Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec®-Marken der Fa. Sachtieben Chemie GmbH), zirkonium-(IV)-oxid, Zinn-(II)-oxid, Zinn-(IV)-oxid (beispielsweise kommerziell verfügbar als Nyacal® SN-Marken der Fa. Akzo-Nobel), Aluminiumoxid (beispielsweise kommerziell verfügbar als Nyacol® AL-Marken der Fa. Akzo-Nobel), Bariumoxid, Magnesiumoxid, verschiedene Eisenoxide, wie Eisen-(II)-oxid (Wuestit), Eisen-(III)- oxid (Hämatit) und Eisen-(II/III)-Oxid (Magnetit), Chrom-(III)-oxid, Antimon-(III)-oxid, Wismut-(III)-oxid, Zinkoxid (beispielsweise kommerziell verfügbar als Sachtotec®-Marken der Fa. Sachtleben Chemie GmbH), Nickel-(II)-oxid, Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol® YTTRIA-Marken der Fa. Akzo-Nobel), Cer-(IV)-oxid (beispielsweise kommerziell verfügbar als Nyacol® CEO2-Marken der Fa. Akzo-Nobel), amorph und/oder in ihren unterschiedlichen Kristallmodifikationen sowie deren Hydroxyoxide, wie beispielsweise Hydroxytitan-(IV)-o)dd, Hydroxyzirkonium-(IV)-oxid, Hydroxyaluminiumoxid (beispielsweise kommerziell verfügbar als Disperal®-Marken der Fa. Condea-Chemie GmbH) und Hydroxyeisen-(III)-oxid, amorph und/oder in ihren unterschiedlichen Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-Sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit [$Ca_5${$(PO_4)_3OH$}], Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat, insbesondere in spontan delaminierender Form, wie beispielsweise Optigel® SH (Marke der Südchemie AG), Saponit® SKS-20 und Hektorit® SKS 21 (Marken der Hoechst AG) sowie Laponite® RD und Laponite® GS (Marken der Laporte Industries Ltd.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tatrate, wie Calciumtatrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche erfindungsgemäß einsetzbare Halbmetallverbindung sei amorphes und/oder in unterschiedlichen Kristallstrukturen vorliegendes Siliziumdioxid genannt. Erfindungsgemäß geeignetes Siliziumdioxid ist kommerziell verfügbar und kann beispielsweise als Aerosil® (Marke der Fa. Degussa AG), Levasil® (Marke der Fa. Bayer AG), Ludox® (Marke der Fa. DuPont), Nyacol® und Bindzil® (Marken der Fa. Akzo-Nobel) und Snowtex® (Marke der Fa. Nissan Chemical Industries, Ltd.) bezogen werden. Erfindungsgemäß geeignete Nichtmetallverbindungen sind beispielsweise kolloidal vorliegender Graphit oder Diamant.

Als feinteilige anorganische Feststoffe sind solche besonders geeignet, deren Löslichkeit in Wasser bei 20 °C und 1 bar (absolut) ≤ 1 g/l, bevorzugt ≤ 0,1 g/l und insbesondere ≤ 0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie

beispielsweise Optigel® SH, Saponit® SKS-20 und Hektorit® SKS 21 sowie Laponite® RD und Laponite® GS, Eisen-(II)-oxid, Eisen-(III)-oxid, Eisen-(II/III)-oxid, Titandioxid, Hydroxylapatit, Zinkoxid und Zinksulfid. Bevorzugt ist der wenigstens eine feinteilige anorganische Feststoff ausgewählt aus der Gruppe umfassend Siliziumdioxid, Aluminiumoxid, Hydroxyaluminiumoxid, Calciumcarbonat, Magnesiumcarbonat, Calciumorthophosphat, Magnesiumorthophosphat, Eisen-(II)-oxid, Eisen-(III)-oxid, Eisen-(II/III)-oxid, Zinn-(IV)-oxid, Cer-(IV)-oxid, Yttrium-(III)-oxid, Titandioxid, Hydroxylapatit, Zinkoxid und Zinksulfid.

Insbesondere bevorzugt sind siliziumhaltige Verbindungen, wie pyrogene und/oder kolloidale Kieselsäure, Siliziumdioxid-Sole und/oder Schichtsilikate. Bevorzugt weisen diese siliziumhaltigen Verbindungen eine elektrophoretische Mobilität mit negativem Vorzeichen auf.

Vorteilhaft können auch die kommerziell verfügbaren Verbindungen der Aerosil®-, Levasil®-, Ludox®-, Nyacol®- und Bindzil®-Marken (Siliziumdioxid), Disperal®-Marken (Hydroxyaluminiumoxid), Nyacol® AL-Marken (Aluminiumoxid), Hombitec®-Marken (Titandioxid), Nyacol® SN-Marken (Zinn-(IV)-oxid), Nyacol® YTTRIA-Marken (Yttrium-(III)-oxid), Nyacol® CEO2-Marken (Cer-(IV)-oxid) und Sachtotec® Marken (Zinkoxid) in den erfindungsgemäßen Verfahren eingesetzt werden.

Die zur Herstellung der Kompositpartikeln einsetzbaren feinteiligen anorganischen Feststoffe sind so beschaffen, dass die im wässrigen Reaktionsmedium dispergierten Feststoffteilchen einen Teilchendurchmesser von ≤ 100 nm aufweisen. Erfolgreich werden solche feinteiligen anorganischen Feststoffe eingesetzt, deren dispergierte Teilchen einen Teilchendurchmesser > 0 nm aber ≤ 90 nm, ≤ 80 ≤ nm, ≤ 70 nm, ≤ 60 nm, ≤ 50 nm, ≤ 40 nm, ≤ 30 nm, ≤ 20 nm oder ≤ 10 nm und alle Werte dazwischen aufweisen. Von Vorteil werden feinteilige anorganische Feststoffe eingesetzt, welche einen Teilchendurchmesser ≤ 50 nm aufweisen. Die Ermittlung der Teilchendurchmesser erfolgt über die Methode der Analytischen Ultrazentrifuge.

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D. F. Evans, H. Wennerström in The Colloidal Domain, Seiten 363 bis 405, Verlag Chemie, Weinheim, 1994 und R. J. Hunter in Foundations of Colloid Science, Vol. I, Seiten 10 bis 17, Clarendon Press, Oxford, 1991).

Die Herstellung der stabilen Feststoffdispersion erfolgt häufig direkt bei der Synthese der feinteiligen anorganischen Feststoffe in wässrigem Medium oder alternativ durch Eindispergieren des feinteiligen anorganischen Feststoffs in das wässrige Medium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder unter Zuhilfenahme geeigneter Hilfsaggregate, wie beispielsweise Dispergatoren oder Ultraschallsonotroden.

Für die Herstellung der wässrigen Kompositpartikel-Dispersionen sind solche feinteiligen anorganischen Feststoffe geeignet, deren wässrige Feststoffdispersion bei einer Anfangsfeststoffkonzentration von ≥ 1 Gew.-%, bezogen auf die wässrige Dispersion des feinteiligen anorganischen Feststoffs, noch eine Stunde nach ihrer Herstellung bzw. durch Aufrühren oder Aufschütteln der sedimentierten Feststoffe, ohne weiteres Rühren oder Schütteln mehr als 90 Gew.-% des ursprünglich dispergierten Feststoffes in dispergierter Form enthält und deren dispergierten Feststoffteilchen einen Durchmesser ≤ 100 nm aufweisen. Üblich sind Anfangsfeststoffkonzentrationen ≤ 60 Gew.-%. Vorteilhaft können jedoch auch Anfangsfeststoffkonzentrationen ≤ 55 Gew.%, ≤ 50 Gew.-%, ≤ 45 Gew.-%, ≤ 40 Gew.-%, ≤ 35 Gew.-%, ≤ 30 Gew.-%, ≤ 25 Gew.-%. ≤ 20 Gew.-%, ≤ 15 Gew.-%, ≤ 10 Gew.-% sowie ≥ 2 Gew.-%, ≥ 3 Gew.%, ≥ 4 Gew.-% oder ≥ 5 Gew.-% und alle Werte dazwischen, jeweils bezogen auf die wässrige Dispersion des feinteiligen anorganischen Feststoffes, eingesetzt werden. Bezogen auf 100 Gew.-Teile an Monomerenmischung werden bei der Herstellung wässriger Kompositpartikel-Dispersionen häufig 1 bis 1000 Gew.-Teile, in der Regel 5 bis 300 Gew.-Teile und oft 10 bis 200 Gew.-Teile des wenigstens einen feinteiligen anorganischen Feststoffes verwendet.

Bei der Herstellung der wässrigen Kompositpartikel-Dispersionen werden allgemein Dispergiermittel mitverwendet, die sowohl die feinteiligen anorganischen Feststoffteilchen als auch die Monomerentröpfchen und die gebildeten Kompositpartikel in der wässrigen Phase dispers verteilt halten und so die Stabilität der erzeugten wässrigen Kompositpartikel-Dispersionen gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Geeignete neutrale Schutzkolloide sind beispielsweise Polyvinylalkohole, Polyalkylenglykole, Cellulose-, Stärke- und Gelatinederivate.

Als anionische Schutzkolloide, d. h. Schutzkolloide, deren dispergierend wirkende Komponente wenigstens eine negative elektrische Ladung aufweist, kommen beispielsweise Polyacrylsäuren und Polymethacrylsäuren und deren Alkalimetallsalze, Acrylsäure, Methacrylsäure, 2-Acrylamido-2-methylpropansulfonsäure, 4-Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol, in Betracht.

Geeignete kationische Schutzkolloide, d. h. Schutzkolloide, deren dispergierend wirkende Komponente wenigstens eine positive elektrische Ladung aufweist, sind beispielsweise die am Stickstoff protonierten und/oder alkylierten Derivate von N-Vinylpyrrolidon, N-Vinylcaprolactam, N-Vinylcarbazol, 1-Vinylimidazol, 2 Vinylimidazol, 2-Vinylpyridin, 4-Vinylpyridin, Acrylamid, Methacrylamid, amingruppentragende Acrylate, Methacrylate, Acrylamide und/oder Methacrylamide enthaltenden Homo- und Copolymerisate.

Selbstverständlich können auch Gemische aus Emulgatoren und/oder Schutzkolloiden eingesetzt werden. Häufig werden als Dispergiermittel ausschließlich Emulgatoren eingesetzt, deren relative Molekulargewichte im Unterschied zu den Schutzkolloiden üblicherweise unter 1500 liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z. B. ethoxilierte Mono-, Di- und Tri-Alkylphenole (EO-Grad: 3 bis 50, Alkylrest: $C_4$ bis $C_{12}$) sowie ethoxilierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxilate, EO-Grad: 3 bis 8), Lutensol® AO-Marken ($C_{13}C_{15}$-Oxoalkoholethoxilate, EO-Grad: 3 bis 30), Lutensol® AT-Marken ($C_{16}C_{18}$-Fettalkoholethoxilate, EO-Grad: 11 bis 80), Lutensol® ON-Marken ($C_{10}$-Oxoalkoholethoxilate, EO-Grad: 3 bis 11) und die Lutensol® TO-Marken ($C_{13}$-Oxoalkoholethoxilate, EO-Grad: 3 bis 20) der BASF AG.

Übliche anionische Emulgatoren sind z. B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $\mathbf{C_9}$ bis $C_{18}$)..

Als weitere anionische Emulgatoren haben sich ferner Verbindungen der allgemeinen Formel I

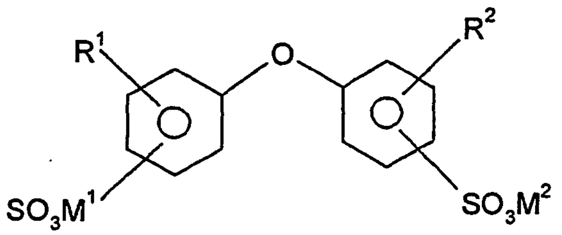

(I)

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder -H, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen I, in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen I sind allgemein bekannt, z.B. aus US-A 4 269 749, und im Handel erhältlich.

Geeignete kationenaktive Emulgatoren sind in der Regel einen $C_6$- bis $C_{18}$-Alkyl-, Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethlyammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Häufig werden zur Herstellung der wässrigen Kompositpartikel-Dispersionen zwischen 0,1 bis 10 Gew.-%, oft 0,5 bis 7,0 Gew.-% und häufig 1,0 bis 5,0 Gew.-% an Dispergiermittel, jeweils bezogen auf die Gesamtmenge an wässriger Kompositpartikel-Dispersion, eingesetzt. Bevorzugt werden Emulgatoren, insbesondere nichtionische und/oder anionische Emulgatoren verwendet. In dem gemäß WO 03000760 offenbarten Verfahren werden anionische, kationische und nichtionische Emulgatoren als Dispergiermittel eingesetzt.

Verfahrenswesentlich ist, das zur Herstellung der erfindungsgemäßen wässrigen Kompositpartikel-Dispersion eine Monomerenmischung eingesetzt wird, welche aus ethylenisch ungesättigten Monomeren A und zu > 0 und ≤ 10 Gew.-% wenigstens eines, eine Epoxidgruppe aufweisenden ethylenisch ungesättigten Monomeren B (Epoxidmonomer)

besteht.

Als Monomere A kommen u. a. insbesondere in einfacher Weise radikalisch polymerisierbare ethylenisch ungesättigte Monomere in Betracht, wie beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono-und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester, Nitrile α,β-monoethylenisch ungesättigter Carbonsäuren, wie Acrylnitril sowie $C_{4-8}$-konjugierte Diene, wie 1,3-Butadien und Isopren. Die genannten Monomere bilden in der Regel die Hauptmonomeren, die, bezogen auf die Gesamtmenge der nach dem erfindungsgemäßen Verfahren zu polymerisierenden Monomeren A normalerweise einen Anteil von ≥ 50 Gew.-%, ≥ 80 Gew.-% oder ≥ 90 Gew.-% auf sich vereinen. In aller Regel weisen diese Monomeren in Wasser bei Normalbedingungen [20 °C, 1 bar (absolut)] lediglich eine mäßige bis geringe Löslichkeit auf.

Weitere Monomere A, welche üblicherweise die innere Festigkeit der Verfilmungen der Polymermatrix erhöhen, weisen normalerweise wenigstens eine Hydroxy-, N-Methylol-oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie, n-Hydroxyethyl-, n-Hydroxypropyl-oder n-Hydroxybutylacrylat und -methacrylat sowie Verbindungen, wie Diacetonacrylamid und Acetylacetoxyethylacrylat bzw. -methacrylat. Erfindungsgemäß werden die vorgenannten Monomeren, bezogen auf die Gesamtmenge der zu polymerisierenden Monomeren A, in Mengen von bis zu 5 Gew.-%, insbesondere 0,1 bis 3 Gew.-% und bevorzugt 0,5 bis 2 Gew.-% zur Polymerisation eingesetzt.

Als Monomere A sind auch Siloxangruppen enthaltende ethylenisch ungesättigte Monomere, wie die Vinyltrialkoxysilane, beispielsweise Vinyltrimethoxysilan, Alkylvinyldialkoxysilane, Acryloxyalkyltrialkoxysilane, oder Methacryloxyalkyltrialkoxysilane, wie beispielsweise Acryloxyethyltrimethoxysilan, Methacryloxyethyltrimethoxysilan, Acryloxypropyltrimethoxysilan oder Methacryloxypropyltrimethoxysilan einsetzbar. Diese Monomere werden in Gesamtmengen von bis zu 5 Gew.-%, häufig von 0,01 bis 3 Gew.-% und oft von 0,05 bis 1 Gew.-%, jeweils bezogen auf die Gesamtmenge der Monomeren A, verwendet. Erfindungsgemäß vorteilhaft werden vorgenannte Siloxangruppen enthaltende Monomere A in Gesamtmengen von 0,01 bis 5 Gew.-%, insbesondere von 0,01 bis 3 Gew.-% und bevorzugt von 0,05 bis 1 Gew.-%, jeweils bezogen auf die Gesamtmenge der zu polymerisierenden Monomeren A, verwendet. Von Bedeutung ist, dass die vorgenannten Siloxangruppen enthaltende ethylenisch ungesättigte Monomere vor, parallel zu oder nach den anderen Monomeren A dosiert werden können.

Daneben können als Monomere A zusätzlich solche ethylenisch ungesättigten-Monomere E, die entweder wenigstens eine Säuregruppe und/oder deren entsprechendes Anion oder solche ethylenisch ungesättigten Monomere F, die wenigstens eine Amino-, Amido-, Ureido- oder N-heterocyclische Gruppe und/oder deren am Stickstoff protonierten oder alkylierten Ammoniumderivate enthalten, eingesetzt werden. Bezogen auf die Gesamtmenge der zu polymerisierenden Monomeren A, beträgt die Menge an Monomeren E bzw. Monomeren F bis zu 10 Gew.-%, oft 0,1 bis 7 Gew.-% und häufig 0,2 bis 5 Gew.-%.

Als Monomere E werden ethylenisch ungesättigte Monomere mit wenigstens einer Säuregruppe eingesetzt. Dabei kann die Säuregruppe beispielsweise eine Carbonsäure-, Sulfonsäure-, Schwefelsäure-, Phosphorsäure- und/ oder Phosphonsäuregruppe sein. Beispiele für solche Monomere E sind Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat und Hydroxyethylmethacrylat, n-Hydroxypropylmethacrylät oder n-Hydroxybutylmethacrylat. Erfindungsgemäß lassen sich aber auch die Ammonium- und Alkalimetallsalze der vorgenannten wengistens eine Säuregruppe aufweisenden ethylenisch ungesättigten Monomeren einsetzen. Als Alkalimetall insbesondere bevorzugt ist Natrium und Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie die Mono- und Di-Ammonium-, -Natrium- und -Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure als Monomere E eingesetzt.

Als Monomere F werden ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere F, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino) ethylacrylat, 2-(N-Methylamino)ethylmethacrylat, 2-(N-Ethylamino)ethylacrylat, 2-(N-Ethylamino) ethylmethacrylat, 2-(N-n-Propylamino)ethylacrylat, 2-(N-n-Propylamino) ethylmethacrylat, 2-(N-iso-Propylamino) ethylacrylat, 2-(N-iso-Propylamino) ethylmethacrylat, 2-(N-tert.-Butylamino)ethylacrylat, 2-(N-tert.-Butylamino)ethylmethacrylat (beispielsweise kommerziell verfügbar als Norsocryl® TBAEMA der Fa. Elf Atochem), 2-(N,N-Dimethylamino) ethylacrylat (beispielsweise kommerziell verfügbar als Norsocryl® ADAME der Fa. Elf Atochem), 2-(N,N-Dimethylamino) ethylmethacrylat (beispielsweise kommerziell verfügbar als Norsocryl® MADAME der Fa. Elf Atochem), 2-(N,N-Diethylamino)ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-iso-propylamino)ethylacrylat, 2-(N,N-Di-iso-propylamino)ethylmethacrylat, 3-(N-Methyl-amino)propylacrylat, 3-(N-Methylamino)propylmethacrylat, 3-(N-Ethylamino) propylacrylat, 3-(N-Ethylamino)propylmethacrylat, 3-(N-n-Propylamino)propylacrylat, 3-(N-n-Propylamino)propylmethacrylat, 3-(N-iso-Propylamino)propylacrylat, 3-(N-iso-Propyl-amino)propylmethacrylat, 3-(N-tert.-Butylamino)propylacrylat, 3-(N-tert.-Butylamino) propylmethacrylat, 3-(N,N-Dimethylamino)propylacrylat, 3-(N,N-Dimethylamino) propylmethacrylat, 3-(N,N-Diethylamino)propylacrylat, 3-(N,N-Diethylamino) propylmethacrylat, 3-(N,N-Di-n-propylamino)propylacrylat, 3-(N,N-Di-n-propylamino) propylmethacrylat, 3-(N,N-Di-iso-propylamino)propylacrylat und 3-(N,N-Di-iso-propylamino)propylmethacrylat.

Beispiele für Monomere F, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmeth-acrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N, N'-Methylenbisacrylamid, N-(Diphenylmethyl)acrylamid, N-Cyclohexylacrylamid, aber auch N-Vinylpyrrolidon und N-Vinylcaprolactam.

Beispiele für Monomere F, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl® 100 der Fa. Elf Atochem).

Beispiele für Monomere F, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden als Monomere F folgende Verbindungen eingesetzt: 2-Vinylpyridin, 4-Vinylpyridin, 2-Vinylimidazol, 2-(N,N-Dimethylamino)ethylacrylat, 2-(N,N-Dimethyl-amino)ethylmethacrylat, 2-(N,N-Diethylamino)ethylacrylat, 2-(N,N-Diethylamino) ethylmethacrylat, 2-(N-tert.-Butylamino)ethylmethacrylat, N-(3-N',N'-Dimethylaminopropyl) methacrylamid und 2-(1-Imidazolin-2-onyl)ethylmethacrylat.

Abhängig vom pH-Wert des wässrigen Reaktionsmediums kann ein Teil oder die Gesamtmenge der vorgenannten stickstoffhaltigen Monomere F in der am Stickstoff protonierten quartären Ammoniumform vorliegen.

Als Monomere F, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl® ADAMQUAT MC 80 der Fa. Elf Atochem), 2-(N,N,N-Trimethylammonium)ethylmethacrylatchlorid (beispielsweise kommerziell verfügbar als Norsocryl® MADQUAT MC 75 der Fa. Elf Atochem), 2-(N-Methyl-N, N-diethylammonium)ethylacrylatchlorid, 2-(N-Methyl-N,N-diethylammonium) ethylmethacrylatchlorid, 2-(N-Methyl-N,N-dipropylammonium)ethylacrylatchlorid, 2-(N-Methyl-N,N-dipropylammonium)ethylmethacrylat, 2-(N-Benzyl-N,N-dimethylammonium) ethylacrylatchlorid (beispielsweise kommerziell verfügbar als Norsocryl® ADAMQUAT BZ 80 der Fa. Elf Atochem), 2-(N-Benzyl-N,N-dimethylammonium)ethylmethacrylatchlorid (beispielsweise kommerziell verfügbar als Norsocryl® MADQUAT BZ 75 der Fa. Elf Atochem), 2-(N-Benzyl-N,N-diethylammonium)ethylacrylatchlorid, 2-(N-Benzyl-N,N-diethylammonium)ethylmethacrylatchlorid, 2-(N-Benzyl-N,N-dipropylammonium) ethylacrylatchlorid, 2-(N-Benzyl-N,N-dipropylammonium)ethylmethacrylatchlorid, 3-(N,N,N-Trimethylammonium)propylacrylatchlorid, 3-(N,N,N-Trimethylammonium)propylmethacrylatchlorid, 3-(N-Methyl-N,N-diethylammonium)propylacrylatchlorid, 3-(N-Methyl-N,N-diethylammonium)propylmethacrylatchlorid, 3-(N-Methyl-N,N-dipropylammonium) propylacrylatchlorid, 3-(N-Methyl-N,N-dipropylammonium) propylmethacrylatchlorid, 3-(N-Benzyl-N,N-dimethylammonium)propylacrylatchlorid, 3-(N-Benzyl-N,N-dimethylammonium)propylmethacrylatchlorid, 3-(N-Benzyl-N,N-diethylammonium)propylacrylatchlorid, 3-(N-Benzyl-N,N-diethylammonium)propylmethacrylatchlorid, 3-(N-Benzyl-N,N-dipropylammonium)propylacrylatchlorid und 3-(N-Benzyl-N,N-dipropylammonium)propylmethacrylatchlorid. Selbstverständlich können an Stelle der genannten Chloride auch die entsprechenden Bromide und Sulfate eingesetzt werden. Bevorzugt werden 2-(N,N,N-Trimethylammonium)ethylacrylatchlorid, 2-(N,N,N-Trimethylammonium)ethylmethacrylatchlorid, 2-(N-Benzyl-N,N-dimethylammonium) ethylacrylatchlorid und 2-(N-Benzyl-N,N-dimethylammonium)ethylmethacrylatchlorid verwendet.

Selbstverständlich können auch Gemische der vorgenannten ethylenisch ungesättigten Monomere E bzw. F eingesetzt werden.

Von Bedeutung ist, dass im Falle des Vorliegens von dispergierten Feststoffteilchen mit einer elektrophoretischen Mobilität mit negativem Vorzeichen, eine Teil- oder die Gesamtmenge des wenigstens einen anionischen Dispergiermittels durch die äquivalente Menge wenigstens eines Monomeren E und im Falle des Vorliegens von dispergierten Feststoffteilchen mit einer elektrophoretischen Mobilität mit positivem Vorzeichen, eine Teil- oder die Gesamtmenge des wenigstens einen kationischen Dispergiermittels durch die äquivalente Menge wenigstens eines Monomeren F ersetzt werden kann.

Mit besonderem Vorteil wird die Zusammensetzung der Monomeren A so gewählt, dass nach deren alleiniger Polymerisation ein Polymerisat resultieren würde, dessen Glasübergangstemperatur ≤ 100 °C, bevorzugt ≤ 60 °C, insbesondere ≤ 40 °C und häufig ≥ -30 °C und oft ≥ -20 °C oder ≥ -10 °C beträgt.

Üblicherweise erfolgt die Bestimmung der Glasübergangstemperatur nach DIN 53 765 (Differential Scanning Calorimetry, 20 K/min, midpoint-Messung).

Nach Fox (T. G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur $T_g$ von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z. B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z. B. J. Brandrup, E. H. Immergut, Polymer Handbook, 1st Ed., J. Wiley, New York, 1966; 2nd Ed. J. Wiley, New York, 1975 und 3rd Ed. J. Wiley, New York, 1989.

Als Monomer B (Epoxidmonomer) können alle ethylenisch ungesättigten Verbindungen eingesetzt werden, welche wenigstens eine Epoxidgruppe aufweisen. Insbesondere ist das wenigstens eine Epoxidmonomer jedoch ausgewählt aus der Gruppe umfassend 1,2-Epoxybuten-3, 1,2-Epoxy-3-methylbuten-3, Glycidylacrylat (2,3-Epoxypropylacrylat), Glycidylmethacrylat (2,3-Epoxypropylmethacrylat), 2,3-Epoxybutylacrylat, 2,3-Epoxybutylmethacrylat, 3,4-Epoxybutylacrylat und 3,4-Epoxybutylmethacrylat sowie die entsprechenden alkoxylierten, insbesondere ethoxylierten und/oder propoxylierten Glycidylacrylate und Glycidylmethacrylate, wie sie beispielsweise in der US-A 5,763,629 offenbart sind. Selbstverständlich können erfindungsgemäß auch Gemische von Epoxidmonomeren herangezogen werden. Bevorzugt werden Glycidylacrylat und/oder Glycidylmethacrylat als Epoxidmonomere eingesetzt.

Bezogen auf die Gesamtmonomerenmenge, beträgt die Menge an Epoxidmonomer > 0 und ≤ 10 Gew.%. Häufig beträgt die Gesamtmenge an Epoxidmonomer ≥ 0,01 Gew.-%, ≥ 0,1 Gew.% oder ≥ 0,5 Gew.-%, oft ≥ 0,8 Gew.-%, ≥ 1 Gew.-% oder % 1,5 Gew.-%, bzw. ≤ 8 Gew.-%, ≤ 7 Gew.% oder ≤ 6 Gew.% und oft ≤ 5 Gew.%, ≤ 4 Gew.-% oder ≤ 3 Gew.-%, jeweils bezogen auf die Gesamtmonomerenmenge. Bevorzugt beträgt die Menge an Epoxidmonomeren ≥ 0,1 und ≤ 5 Gew.% und insbesondere bevorzugt ≥ 0,5 und ≤ 3 Gew.-%, jeweils bezogen auf die Gesamtmonomerenmenge.

Demnach besteht die zu polymerisierende Monomerenmischung bevorzugt aus ≥ 95 und ≤ 99,9 Gew.-% und insbesondere bevorzugt ≥ 97 und ≤ 99,5 Gew.-% an Monomeren A und ≥ 0,1 und ≤ 5 Gew.% und insbesondere bevorzugt ≥ 0,5 und ≤ 3 Gew.% an Epoxidmonomeren.

Mit Vorteil wird die zu polymerisierende Monomerenmischung so gewählt, dass das daraus erhaltene Polymerisat eine Glasübergangstemperatur ≤ 100 °C, bevorzugt ≤ 60 °C oder ≤ 40 °C, insbesondere ≤ 30 °C oder ≤ 20 °C und häufig ≥ -30 °C oder ≥ -15 °C und oft ≥ -10 °C oder ≥ -5 °C aufweist und somit die wässrigen Kompositpartikel-Dispersionen - gegebenfalls in Anwesenheit üblicher Filmbildehilfsmittel - in einfacher Weise in die die feinteiligen anorganischen Feststoffe enthaltenden Polymerisatfilme (Kompositfilme) überführbar sind.

Zur Herstellung der erfindungsgemäßen wässrigen Kompositpartikel-Dispersion durch radikalische Polymerisation kommen alle diejenigen radikalischen Polymerisationsinitiatoren in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium-oder Ammoniumsalze

oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/ oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten radikalischen Polymerisationsinitiators, bezogen auf die Gesamtmenge des Monomerengemisches, 0,1 bis 5 Gew.-%.

Als Reaktionstemperatur für die radikalische wässrige Polymerisationsreaktion in Anwesenheit des feinteiligen anorganischen Feststoffes kommt der gesamte Bereich von 0 bis 170 °C in Betracht. Dabei werden in der Regel Temperaturen von 50 bis 120 °C, häufig 60 bis 110 °C und oft ≥ 70 bis 100 °C angewendet. Die radikalische wässrige Emulsionspolymerisation kann bei einem Druck kleiner, gleich oder größer 1 bar (absolut) durchgeführt werden, wobei die Polymerisationstemperatur 100 °C übersteigen und bis zu 170 °C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässerige Polymerisation bei 1 bar (absolut) unter Inertgasatmosphäre, wie beispielsweise unter Stickstoff oder Argon durchgeführt.

Das wässrige Reaktionsmedium kann prinzipiell in untergeordnetem Maße auch wasserlösliche organische Lösungsmittel, wie beispielsweise Methanol, Ethanol, Isopropanol, Butanole, Pentanole, aber auch Aceton etc. umfassen. Bevorzugt erfolgt die Polymerisationsreaktion jedoch in Abwesenheit solcher Lösungsmittel.

Neben den vorgenannten Komponenten können in den Verfahren zur Herstellung der wässrigen Kompositpartikel-Dispersion optional auch radikalkettenübertragende Ver bindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise E-thanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E. H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen. Die optional eingesetzte Gesamtmenge der radikalkettenübertragenden Verbindungen, bezogen auf die Gesamtmenge der zu polymerisierenden Monomeren, ist in der Regel ≤ 5 Gew.%, oft ≤ 3 Gew.-% und häufig ≤ 1 Gew.-%.

Die nach dem erfindungsgemäßen Verfahren zugänglichen wässrigen Kompositpartikel-Dispersionen weisen üblicherweise einen Gesamtfeststoffgehalt von 1 bis 70 Gew.-%, häufig von 5 bis 65 Gew.-% und oft von 10 bis 60 Gew.-% auf.

Die nach dem erfindungsgemäßen Verfahren erhältlichen Kompositpartikel weisen in der Regel mittlere Teilchendurchmesser im Bereich ≥ 10 nm und ≤ 1000 nm, häufig im Bereich ≥ 50 nm und ≤ 400 nm und oft im Bereich ≥ 100 nm und ≤ 300 nm auf. Auch die Bestimmung der mittleren Kompositpartikel-Teilchendurchmesser erfolgt durch die Methode der Analytischen Ultrazentrifuge (vgl. hierzu S. E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Die angegebenen Werte entsprechen den sogenannten $d_{50}$-Werten. Zur Ausbildung von Kompositfilmen mit erhöhter Bruchspannung eignen sich vorteilhaft solche Kompositpartikel-Dispersionen, deren Kompositpartikel einen mittleren Teilchendurchmesser ≥ 50 nm und ≤ 300 nm, bevorzugt ≤ 200 nm und insbesondere ≤ 150 nm aufweisen.

Die nach dem erfindungsgemäßen Verfahren zugänglichen Kompositpartikel können unterschiedliche Strukturen aufweisen. Dabei können die Kompositpartikel ein oder mehrere der feinteiligen Feststoffteilchen enthalten. Die feinteiligen Feststoffteilchen können vollständig von der Polymermatrix umhüllt sein. Es ist aber auch möglich, dass ein Teil der feinteiligen Feststoffteilchen von der Polymermatrix umhüllt ist, während ein anderer Teil auf der Oberfläche der Polymermatrix angeordnet ist. Selbstverständlich ist es auch möglich, dass ein Großteil der feinteiligen Feststoffpartikel auf der Oberfläche der Polymermatrix gebunden ist.

Üblicherweise weisen die nach dem erfindungsgemäßen Verfahren zugänglichen Kompositpartikel einen Gehalt an feinteiligem anorganischem Feststoff von ≥ 10 Gew.-%, bevorzugt ≥ 15 Gew.-% und insbesondere bevorzugt ≥ 20 Gew.-%, ≥ 25 Gew.-% oder ≥ 30 Gew.-% auf.

Die erfindungsgemäß zugänglichen wässrigen Kompositpartikel-Dispersionen eignen sich vorteilhaft beispielsweise als Bindemittel, zur Herstellung einer Schutzschicht, als Klebstoff oder zur Modifizierung von Zement- und Mörtelformulierungen. Die nach dem erfindungsgemäßen Verfahren zugänglichen Kompositpartikel lassen sich prinzipiell auch in der medizinischen Diagnostik sowie in anderen medizinischen Anwendungen einsetzen (vgl. z. B. K. Mosbach und L. Andersson, Nature, 1977, 270, Seiten 259 bis 261; P. L. Kronick, Science 1978, 200, Seiten 1074 bis 1076; US-A 4,157,323). Abhängig vom geplanten Einsatzzweck können die erfindungsgemäß zugänglichen wässrigen Kompositpartikel-Dispersionen mit weiteren Formulierungsbestandteilen, beispielsweise Pigmente und Füllstoffe und/oder weiteren üblichen Hilfsstoffen, beispielsweise sogenannte Filmbildehilfsmittel, Verdicker, Entschäumer, Netz- und Dispergierhilfsmittel, Neutralisationsmittel und/oder Konservierungsmittel gemischt werden.

Als Pigmente können prinzipiell alle dem Fachmann geläufigen Weiß- bzw. Buntpigmente eingesetzt werden.

Als wichtigstes Weißpigment ist aufgrund seines hohen Brechungsindex und seines guten Deckvermögens Titandioxid in seinen verschiedenen Modifikationen zu nennen. Aber auch Zinkoxid und Zinksulfid werden als Weißpigmente eingesetzt. Dabei können diese Weißpigmente in oberflächenbeschichteter (d. h. gecoateter) bzw. unbeschichteter (d. h. nicht gecoateter) Form eingesetzt werden. Daneben werden aber auch organische Weißpigmente, wie beispielsweise nichtverfilmende styrol- und carboxylgruppenreiche hohle Polymerisatteilchen mit einer Teilchengröße von ca. 300 bis 400 nm (sogenannte Opakteilchen) verwendet.

Neben Weißpigmenten können zur Farbgestaltung - beispielsweise einer die erfindungsgemäß zugängliche wässrige Kompositpartikel-Dispersion enthaltende Beschichtungsmasse - dem Fachmann geläufige unterschiedlichste Buntpigmente, beispielsweise die etwas preiswerteren anorganischen Eisen-, Cadmium-, Chrom- und Bleioxide bzw. -sulfide, Bleimolybdat, Kobaltblau oder Ruß sowie die etwas teureren organischen Pigmente, beispielsweise Phthalocyanine, Azopigmente, Chinacridone, Perylene oder Carbozole eingesetzt werden.

Als Füllstoffe werden im wesentlichen anorganische Materialien mit im Vergleich zu den Pigmenten geringerem Brechungsindex verwendet. Die pulverförmigen Füllstoffe sind dabei häufig natürlich vorkommende Mineralien, wie beispielsweise Calcit, Kreide, Dolomit, Kaolin, Talk, Glimmer, Diatomeenerde, Baryt, Quarz oder Talk/Chlorit-Verwachsungen aber auch synthetisch hergestellte anorganische Verbindungen, wie beispielsweise präzipitiertes Calciumcarbonat, kalziniertes Kaolin oder Bariumsulfat sowie pyrogene Kieselsäure. Bevorzugt wird als Füllstoff Calciumcarbonat in Form des kristallinen Calcits oder der amorphen Kreide eingesetzt.

Filmbildehilfsmittel, auch Koaleszenzhilfsmittel genannt, werden eingesetzt, um auch die in den Kompositpartikeln enthaltenen Polymerisate mit einer Glasübergangstemperatur von über 20 °C sicher bei Raumtemperatur verfilmen zu können. Diese Filmbildehilfsmittel verbessern die Filmbildung der polymeren Bindemittel bei der Ausbildung der Beschichtung und werden dann anschließend in Abhängigkeit von der Umgebungstemperatur, der Luftfeuchtigkeit und des Siedepunkts, sowie dem daraus resultierenden Dampfdruck aus der Beschichtung an die Umgebung abgegeben. Bei den Filmbildehilfsmittel, welche dem Fachmann bekannt sind, handelt es sich beispielsweise um Testbenzin, wassermischbare Glykolether, wie Butylglykol, Butyldiglykol, Dipropylenglykolmonomethyl- oder Dipropylenglykolbutylether sowie Glykolacetate, wie Butylglykolacetat, Butyldiglykolacetat, aber auch Ester von Carbonsäuren und Dicarbonsäuren, wie 2-Ethylhexylbenzoat, 2,2,4-Trimethylpentandiol-1,3-monoisobutyrat oder Tripropylenglykolmonoisobutyrat.

Um die Rheologie von wässrigen, die erfindungsgemäßen wässrigen Kompositpartikel-Dispersionen enthaltenen Formulierungsmassen bei Herstellung, Handling, Lagerung und Applikation optimal einzustellen, werden häufig sogenannte Verdicker oder Rheologieadditive als Formulierungsbestandteil eingesetzt. Dem Fachmann sind eine Vielzahl unterschiedlicher Verdicker bekannt, beispielsweise organische Verdicker, wie Xanthanverdicker, Guarverdicker (Polysaccharide), Carboxymethylcellulose, Hydroxyethylcellulose, Methylcellulose, Hydroxypropylmethylcellulose, Ethylhydroxyethylcellulose (Cellulosederivate), alkaliquellbare Dispersionen (Acrylatverdicker) oder hydrophob modifizierte, polyetherbasierte Polyurethane (Polyurethanverdicker) oder anorganische Verdicker, wie Bentonit, Hectorit, Smectit, Attapulgit (Bentone) sowie Titanate oder Zirkonate (Metallorganyle).

Um die Schaumbildung bei Herstellung, Handling, Lagerung und Applikation der erfindungsgemäß zugänglichen wässrigen Formulierungsmassen zu vermeiden, finden sogenannte Entschäumer Verwendung. Die Entschäumer sind dem Fachmann geläufig. Es handelt sich hierbei im wesentlichen um Mineralöl- und die Silikonölentschäumer. Entschäumer, vor allem die hochaktiven silikonhaltigen, sind generell sehr sorgfältig auszuwählen und zu dosieren, da sie zu Oberflächendefekten (Krater, Dellen etc.) der Beschichtung führen können. Wesentlich ist, dass durch Zusatz von feinstteiligen, hydrophoben Partikeln, beispielsweise hydrophobe Kieselsäure oder Wachspartikel, in die Entschäumerflüssigkeit, die Entschäumerwirkung noch gesteigert werden kann.

Netz- und Dispergierhilfsmittel werden verwendet, um pulverförmige Pigmente und Füllstoffe in den erfindungsgemäß zugänglichen wässrigen Formulierungsmassen optimal zu verteilen. Dabei unterstützen die Netz- und Dispergierhilfsmittel den Dispergiervorgang durch Erleichterung der Benetzung der pulverförmigen Pigmente und Füllstoffe im wässrigen Dispersionsmedium (Netzmittelwirkung), durch Aufbrechen von Pulveragglomeraten (Spaltwirkung) und durch sterische bzw. elektrostatische Stabilisierung der beim Scherprozess entstehenden Pigment- und Füllstoffprimärpartikel (Dispergiermittelwirkung). Als Netz- und Dispergierhilfsmittel werden insbesondere die dem Fachmann geläufigen Polyphosphate und Salze von Polycarbonsäuren, insbesondere Natriumsalze von Polyacrylsäuren bzw. Acrylsäure-Copolymeren eingesetzt. Falls erforderlich, können dem Fachmann als Neutralisationsmittel geläufige Säuren oder Basen zur pH-Werteinstellung der erfindungsgemäß zugänglichen wässrigen Formulierungsmassen verwendet werden.

Um den Befall der erfindungsgemäß zugänglichen wässrigen Formulierungsmassen bei Herstellung, Handling, Lagerung und Applikation durch Mikroorganismen, wie beispielsweise Bakterien, (Schimmel) Pilzen oder Hefen zu vermeiden, werden häufig dem Fachmann geläufige Konservierungsmittel oder Biocide eingesetzt. Dabei finden insbesondere Wirkstoffkombinationen aus Methyl- und Chlorisothiazolinonen, Benzisothiazolinonen, Formaldehyd bzw. formaldehydabspaltende Agenzien Verwendung.

Neben vorgenannten Hilfsstoffen können den erfindungsgemäß zugänglichen wässrigen Formulierungsmassen bei Herstellung, Handling, Lagerung und Applikation auch noch weitere, dem Fachmann geläufige Hilfsstoffe, wie beispielsweise Mattierungsmittel, Wachse oder Verlaufshilfsmittel etc. zugesetzt werden.

Auch sei festgehalten, dass die erfindungsgemäß zugänglichen wässrigen Kompositpartikel-Dispersionen in einfacher und dem Fachmann bekannter Weise zu redisper gierbaren Kompositpartikelpulvern trockenbar sind (z.B. Gefriertrocknung oder Sprühtrocknung). Dies gilt insbesondere dann, wenn die Glasübergangstemperatur der Polymermatrix der erfindungsgemäß zugänglichen Kompositpartikel $\geq 50$ °C, vorzugsweise $\geq 60$ °C, besonders bevorzugt $\geq 70$ °C, ganz besonders bevorzugt $\geq 80$ °C und insbesondere bevorzugt $\geq 90$ °C beträgt. Die erfindungsgemäß zugänglichen Kompösitpartikelpulver eignen sich u. a. als Additive für Kunststoffe, Komponenten für Tonerformulierungen oder Zusatzstoffe in elektrophotographischen Anwendungen sowie als Komponenten in Zement- und Mörtelformulierungen.

Die Erfindung wird anhand des nachfolgenden, nicht einschränkenden Beispiels näher erläutert.

Beispiele

1. Herstellung einer wässrigen Kompositpartikel-Dispersion D1

In einem 2l-Vierhalskolben, ausgerüstet mit einem Rückflusskühler, einem Thermometer, einem mechanischen Rührer sowie einer Dosiervorrichtung, wurden bei 20 bis 25°C (Raumtemperatur) und 1 bar (absolut) unter Stickstoffatmosphäre und Rühren (200 Umdrehungen pro Minute) 416,6 g Nyacol® 2040 und daran anschließend ein Gemisch aus 2,5 g Methacrylsäure und 12 g einer 10 gew.-%igen wässrigen Lösung von Natriumhydroxid innerhalb von 5 Minuten zugegeben. Danach fügte man der gerührten Reaktionsmischung während 15 Minuten ein Gemisch aus 10,4 g einer 20 gew.-%igen wässrigen Lösung des nichtionischen Tensids Lutensol® AT 18 (Marke der BASF AG, $C_{16}C_{18}$-Fettalkoholethoxilat mit 18 Ethylenoxid-Einheiten) und 108,5 g entionisiertem Wasser zu. Daran anschließend wurde dem Reaktionsgemisch während 60 Minuten 0,83 g N-Cetyl-N,N,N-trimethylammoniumbromid (CTAB), gelöst in 200 g entionisiertem Wasser, zudosiert. Danach heizte man das Reaktionsgemisch auf eine Reaktionstemperatur von 80°C auf.

Parallel stellte man als Zulauf 1 eine Monomerenmischung, bestehend aus 115 g Methylmethacrylat (MMA), 127,5 g n-Butylacrylat (n-BA), 5 g Glycidylmethacrylat (GMA) und 0,5 g Methacryloxypropyltrimethoxysilan (MEMO) sowie als Zulauf 2 eine Initiatorlösung, bestehend aus 2,5 g Natriumperoxodisulfat, 7 g einer 10 gew.-%igen wässrigen Lösung von Natriumhydroxid und 200 g entionisiertem Wasser, her.

Anschließend wurden der bei Reaktionstemperatur gerührten Reaktionsmischung während 5 Minuten über zwei separate Zulaufleitungen 21,1 g von Zulauf 1 und 57,1 g von Zulauf 2 zugegeben. Danach rührte man die Reaktionsmischung eine Stunde bei Reaktionstemperatur. Anschließend fügte man dem Reaktionsgemisch 0,92 g einer 45 gew.-%igen wässrigen Lösung von Dowfax® 2A1 zu. Innerhalb von 2 Stunden wurden nun zeitgleich beginnend die Reste von Zulauf 1 und Zulauf 2 dem Reaktionsgemisch kontinuierlich zudosiert. Danach rührte man die Reaktionsmischung eine weitere Stunde bei Reaktionstemperatur und kühlte sie anschließend auf Raumtemperatur ab.

Die so erhaltene wässrige Kompositpartikel-Dispersion wies einen Feststoffgehalt von 35,1 Gew.-%, bezogen auf das Gesamtgewicht der wässrigen Kompositpartikel-Dispersion, auf.

Der Feststoffgehalt wurde bestimmt, indem ca. 1 g der wässrigen Kompositpartikel-Dispersion in einem offenen

Aluminiumtiegel mit einem Innendurchmesser von ca. 3 cm in einem Trockenschrank bei 150°C bis zur Gewichtskonstanz getrocknet wurde. Zur Bestimmung des Feststoffgehalts wurden jeweils zwei separate Messungen durchgeführt und der entsprechende Mittelwert gebildet.

Gehalt an anorganischem Feststoff im Kompositpartikel errechnet sich zu 40 Gew.-%, bezogen auf den Gesamtfestsoffgehalt der wässrigen Kompositpartikel-Dispersion/auf das Kompositpartikel-Gesamtgewicht.

Das Polymerisat der erhaltenen Kompositpartikel wies eine Glasübergangstemperatur von < 5 °C auf (DIN 53 765).

Die mittels der Methode der Analytischen Ultrazentrifuge bestimmte mittlere Teilchendurchmesser ($d_{50}$) der erhaltenen Kompositpartikel betrug 70 nm.

2. Herstellung einer wässrigen Vergleichskompositpartikel-Dispersion V1

Die Herstellung der Vergleichskompositpartikel-Dispersion V1 erfolgte analog der Herstellung von D1 mit der Ausnahme, dass als Zulauf 1 eine Monomerenmischung, bestehend aus 117,5 g MMA, 130 g n-BA und 0,5 g MEMO verwendet wurde.

die so erhaltene wässrige Vergleichs-Dispersion wies einen Feststoffgehalt von 35,1 Gew.-%, bezogen auf das Gesamtgewicht der wässrigen Kompositpartikel-Dispersion, auf. Der mittlere Teilchendurchmesser ($d_{50}$) der Kompositpartikel betrug 65 nm. Das Polymerisat der Vergleichskompositpartikel wies eine Glasübergangstemperatur von < 5 °C auf.

Gehalt an anorganischem Feststoff in den Vergleichskompositpartikeln errechnet sich ebenfalls zu 40 Gew.-%, bezogen auf den Gesamtfeststoffgehalt der wässrigen Kompositpartikel-Dispersion.

3. Anwendungstechnische Untersuchungen

Die wässrigen Dispersionen D1 und V1 wurden in Silikonkautschukformen 7 Tage bei 23 °C und 50 % relativer Luftfeuchtigkeit zu ca. 0,4 bis 0,7 mm dicken Kompositfilmen getrocknet. Die Bruchspannungs-Messungen an den Filmen wurden mit einer Zugprüfmaschine 4464 der Firma Instron nach DIN 53455/Stab 3 (Abzugsgeschwindigkeit 100 mm/min) durchgeführt.

Insgesamt wurden 2 Messserien mit je 6 Einzelmessungen durchgeführt. Die erste Messserie wurde an den bei 23°C und 50 % relativer Luftfeuchtigkeit getrockneten Kompositfilmen durchgeführt (Bruchspannungswert 1). Die zweite Messserie wurde an getrockneten Kompositfilmen durchgeführt, welche im Anschluss an ihre siebentägige Trocknung bei 23°C und 50 % relativer Luftfeuchtigkeit, für weitere 60 Stunden bei 23°C und 100 % relativer Luftfeuchtigkeit gelagert wurden (Bruchspannungswert 2). Die bei den Bruchspannungs-Messungen erhaltenen Ergebnisse sind in nachfolgender Tabelle angegeben. Die in der Tabelle angegebenen Bruchspannungswerte 1 und 2 stellen dabei die Mittelwerte der jeweils 6 unabhängigen Messungen dar.

| Kompositfilm erhalten aus | Bruchspannungswert 1 [in MPa] | Bruchspannungswert 2 [in MPa] |
|---|---|---|
| D1 | 12,1 +/- 0,9 | 5,0 +/- 0,5 |
| V1 | 9,9 +/- 0,4 | 3,4 +/- 0,2 |

Aus den vorgenannten Ergebnissen ist klar ersichtlich, dass die Bruchspannungswerte des aus der erfindungsgemäßen wässrigen Kompositpartikel-Dispersion D1 (enthaltend ein Epoxidgruppen aufweisendes Monomer in einpolymerisierter Form) zugänglichen Kompositfilms deutlich über den Bruchspannungswerten des aus der Vergleichsdispersion V1 (enthaltend kein Epoxidgruppen aufweisendes Monomer in einpolymerisierter Form) zugänglichen Kompositfilms liegen.

## Patentansprüche

1. Verfahren zur Herstellung einer wässrigen Dispersion von aus Polymerisat und feinteiligem anorganischem Feststoff aufgebauten Partikeln (Kompositpartikel), bei dem ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergiermittels nach der Methode der radikalisch wässrigen Emulsionspolymerisation polymerisiert werden, **dadurch gekennzeichnet, dass** als ethylenisch ungesättigte Monomere eine Monomerenmischung eingesetzt wird, welche aus ethylenisch ungesättigten Monomeren A und zu > 0 und ≤ 10 Gew.-% wenigstens eines, eine Epoxidgruppe aufweisenden ethylenisch ungesättigten Monomeren B (Epoxidmonomer) besteht und dass

a) eine stabile wässrige Dispersion des wenigstens einen anorganischen Feststoffes eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen Durchmesser ≤ 100 nm, ermittelt über die Methode der Analytischen Ultrazentrifuge, aufweisen,
b) die dispergierten Feststoffteilchen des wenigstens einen anorganischen Feststoffs in einer wässrigen Standardkaliumchlorid-Lösung bei einem pH-Wert, der dem pH-Wert des wässrigen Reaktionsmediums vor Beginn der Zugabe der Dispergiermittel entspricht, eine von Null verschiedene elektrophoretische Mobilität zeigen,
c) die wässrige Feststoffteilchendispersion vor Beginn der Zugabe der Monomerenmischung mit wenigstens einem anionischen, kationischen und nichtionischen Dispergiermittel versetzt wird,
d) danach 0,01 bis 30 Gew.-% der Gesamtmenge der Monomerenmischung der wässrigen Feststoffteilchendispersion zugesetzt und bis zu einem Umsatz von wenigstens 90 % polymerisiert wird und
e) daran anschließend die Restmenge der Monomerenmischung unter Polymerisationsbedingungen nach Maßgabe des Verbrauchs kontinuierlich zugegeben wird.

2. Verfahren nach Anspruch 1, **dadurch gekennzeichnet, dass**, bezogen auf 100 Gew.-Teile Monomerenmischung, 1 bis 100D Gew.-Teile des wenigstens einen feinteiligen anorganischen Feststoffs eingesetzt werden und, dass dann, wenn die dispergierten Feststoffteilchen

   a) eine elektrophoretische Mobilität mit negativem Vorzeichen aufweisen, 0,01 bis 10 Gew.-Teile wenigstens eines kationischen Dispergiermittels, 0.01 bis 100 Gew.-Teile wenigstens eines nichtionischen Dispergiermittels und wenigstens ein anionisches Dispergiermittel eingesetzt werden, wobei dessen Menge so bemessen wird, dass das äquivalente Verhältnis von anionischem zu kationischem Dispergiermittel größer 1 ist, oder
   b) eine elektrophoretische Mobilität mit positivem Vorzeichen aufweisen, 0,01 bis 10 Gew.-Teile wenigstens eines anionischen Dispergiermittels, 0,01 bis 100 Gew.-Teile wenigstens eines nichtionischen Dispergiermittels und wenigstens ein kationisches Dispergiermittel eingesetzt werden, wobei dessen Menge so bemessen wird, dass das äquivalente Verhältnis von kationischem zu anionischem Dispergiermittel größer 1 ist.

3. Verfahren nach Anspruch 2, **dadurch gekennzeichnet, dass**

   a) im Falle des Vorliegens von dispergierten Feststoffteilchen mit einer elektrophoretischen Mobilität mit negativem Vorzeichen, eine Teil- oder die Gesamtmenge des wenigstens einen anionischen Dispergiermittels durch die äquvalente Menge wenigstens eines Monomeren E ersetzt ist, welches wenigstens eine Säuregruppe und/oder deren entsprechendes Anion enthält, und
   b) im Falle des Vorliegens von dispergierten Feststoffteilchen mit einer elektrophoretischen Mobilität mit positivem Vorzeichen, eine Teil- oder die Gesamtmenge des wenigstens einen kationischen Dispergiermittels durch die äquvalente Menge wenigstens eines Monomeren F ersetzt ist, welches wenigstens eine Amino-, Amido-, Ureido- oder N-heterocyclische Gruppe und/oder deren am Stickstoff protonierten oder alkylierten Ammoniumderivate enthält.

4. Verfahren nach einem der Ansprüche 1 bis 3, **dadurch gekennzeichnet, dass** das wenigstens eine nichtionische Dispergiermittel vor dem wenigstens einen kationischen und anionischen Dispergiermittel zugegeben wird.

5. Verfahren nach einem der Ansprüche 1 bis 4, **dadurch gekennzeichnet, dass** der wenigstens eine anorganische Feststoff ausgewählt ist aus der Gruppe umfassend Siliziumdioxid, Aluminiumoxid, Hydroxyaluminiumoxid, Calciumcarbonat, Magnesiumcarbonat, Calciumorthophosphat, Magnesiumorthophosphat, Eisen-(II)-oxid, Eisen-(III)-oxid, Eisen-(II/III)-oxid, Zinn-(IV)-oxid, Cer-(IV)-oxid, Yttrium-(III)-oxid, Titandioxid, Hydroxylapatit, Zinkoxid und Zinksulfid.

6. Verfahren nach einem der Ansprüche 1 bis 5, **dadurch gekennzeichnet, dass** es sich bei dem wenigstens einen anorganischen Feststoff um pyrogene und/oder kolloidale Kieselsäure, ein Siliziumdioxid-Sol und/oder ein Schichtsilikat handelt.

7. Verfahren nach einem der Ansprüche 1 bis 6, **dadurch gekennzeichnet, dass** als wenigstens ein Epoxidmonomer Glycidylacrylat und/oder Glycidylmethacrylat eingesetzt wird.

8. Verfahren nach einem der Ansprüche 1 bis 7, **dadurch gekennzeichnet, dass** die Monomerenmischung 0,01 bis 5 Gew.-%, bezogen auf die Gesamtmenge der Monomeren A, ethylenisch ungesättigte Monomere enthält, welche eine Siloxangruppe aufweisen.

9. Verfahren nach einem der Ansprüche 1 bis 8, **dadurch gekennzeichnet, dass** die Gesamtmenge des wenigstens einen Epoxidmonomeren in der Monomerenmischung 0,1 bis 5 Gew.-% beträgt.

10. Verfahren nach einem der Ansprüche 1 bis 9, **dadurch gekennzeichnet, dass** die Zusammensetzung der Monomeren A so gewählt wird, dass nach deren alleiniger Polymerisation ein Polymerisat resultieren würde, dessen Glasübergangstemperatur ≤ 60 °C beträgt.

## Claims

1. A process for preparing an aqueous dispersion of particles composed of addition polymer and finely divided inorganic solid (composite particles), in which process ethylenically unsaturated monomers are dispersely distributed in aqueous medium and polymerized by the method of free-radical aqueous emulsion polymerization by means of at least one free-radical polymerization initiator in the presence of at least one dispersely distributed, finely divided inorganic solid and at least one dispersant, wherein use is made, as ethylenically unsaturated monomers, of a monomer mixture composed of ethylenically unsaturated monomers A and > 0 and ≤ 10% by weight of at least one ethylenically unsaturated monomer B containing an epoxide group (epoxide monomer) and
wherein

   a) a stable aqueous dispersion of said at least one inorganic solid is used, said dispersion having the characteristic features that at an initial solids concentration of ≥ 1% by weight, based on the aqueous dispersion of said at least one inorganic solid, it still comprises in dispersed form one hour after its preparation more than 90% by weight of the originally dispersed solid and its dispersed solid particles have a diameter ≤ 100 nm, determined by the method of analytical ultracentrifugation,
   b) the dispersed particles of said at least one inorganic solid exhibit a nonzero electrophoretic mobility in an aqueous standard potassium chloride solution at a pH which corresponds to the pH of the aqueous reaction medium before the beginning of the dispersant addition,
   c) at least one anionic, cationic and nonionic dispersant is added to the aqueous solid-particle dispersion before the beginning of the addition of the monomer mixture,
   d) then from 0.01 to 30% by weight of the total amount of the monomer mixture is added to the aqueous solid-particle dispersion and polymerized to a conversion of at least 90%,
   and
   e) thereafter the remainder of the monomer mixture is added continuously under polymerization conditions at the rate at which it is consumed.

2. The process according to claim 1, wherein from 1 to 1000 parts by weight of said at least one finely divided inorganic solid are used per 100 parts by weight of monomer mixture and wherein

   a) when the dispersed solid particles have an electrophoretic mobility having a negative sign, from 0.01 to 10 parts by weight of at least one cationic dispersant, from 0.01 to 100 parts by weight of at least one nonionic dispersant, and at least one anionic dispersant are used, the amount thereof being such that the equivalent ratio of anionic to cationic dispersant is more than 1, or
   b) when the dispersed solid particles have an electrophoretic mobility having a positive sign, from 0.01 to 10 parts by weight of at least one anionic dispersant, from 0.01 to 100 parts by weight of at least one nonionic dispersant, and at least one cationic dispersant are used, the amount thereof being such that the equivalent ratio of cationic to anionic dispersant is more than 1.

3. The process according to claim 2, wherein

   a) in the presence of dispersed solid particles having an electrophoretic mobility having a negative sign, some or all of said at least one anionic dispersant is replaced by the equivalent amount of at least one monomer E

comprising at least one acid group and/or its corresponding anion, and

b) in the presence of dispersed solid particles having an electrophoretic mobility having a positive sign, some or all of said at least one cationic dispersant is replaced by the equivalent amount of at least one monomer F comprising at least one amino, amido, ureido or N-heterocyclic group and/or the N-protonated or N-alkylated ammonium derivatives thereof.

**4.** The process according to any of claims 1 to 3, wherein said at least one nonionic dispersant is added before said at least one cationic and anionic dispersant.

**5.** The process according to any of claims 1 to 4, wherein said at least one inorganic solid is selected from the group comprising silicon dioxide, aluminum oxide, hydroxyaluminum oxide, calcium carbonate, magnesium carbonate, calcium orthophosphate, magnesium orthophosphate, iron(II) oxide, iron(III) oxide, iron(II/III) oxide, tin(IV) oxide, cerium(IV) oxide, yttrium(III) oxide, titanium dioxide, hydroxylapatite, zinc oxide and zinc sulfide.

**6.** The process according to any of claims 1 to 5, wherein said at least one inorganic solid is a pyrogenic and/or colloidal silica, a silicon dioxide sol and/or a phyllosilicate.

**7.** The process according to any of claims 1 to 6, wherein glycidyl acrylate and/or glycidyl methacrylate is used as said at least one epoxide monomer.

**8.** The process according to any of claims 1 to 7, wherein the monomer mixture comprises from 0.01 to 5% by weight, based on the total amount of the monomers A, of ethylenically unsaturated monomers which contain a siloxane group.

**9.** The process according to any of claims 1 to 8, wherein the total amount of said at least one epoxide monomer in the monomer mixture is from 0.1 to 5% by weight.

**10.** The process according to any of claims 1 to 9, wherein the composition of the monomers A is chosen such that polymerization of them alone would result in an addition polymer having a glass transition temperature ≤ 60°C.

## Revendications

**1.** Procédé pour la préparation d'une dispersion aqueuse de particules constituées de polymérisat et de matière solide inorganique finement divisée (particules composites), dans lequel on disperse dans un milieu aqueux des monomères à insaturation éthylénique et on les polymérise selon la méthode de la polymérisation radicalaire en émulsion aqueuse, à l'aide d'au moins un amorceur de polymérisation radicalaire, en présence d'au moins une matière solide inorganique finement divisée, dispersée, et d'au moins un dispersant, **caractérisé en ce qu'**on utilise comme monomères à insaturation éthylénique un mélange de monomères qui consiste en des monomères à insaturation éthylénique A et, à raison de > 0 et ≤ 10 % en poids, en au moins un monomère à insaturation éthylénique B comportant un groupe époxyde (monomère époxyde) et
**en ce que**

a) on utilise une dispersion aqueuse stable de ladite au moins une matière solide inorganique, qui est **caractérisée en ce que** pour une concentration initiale de matière solide de ≥ 1 % en poids, par rapport à la dispersion aqueuse de ladite au moins une matière solide inorganique, elle contient encore sous forme dispersée une heure après sa préparation plus de 90 % en poids de la matière solide initialement dispersée et dont les particules de matière solide dispersée présentent un diamètre ≤ 100 nm, déterminé par la méthode de l'ultracentrifugeuse analytique,

b) les particules de matière solide dispersées de ladite au moins une matière solide inorganique présentent, dans une solution aqueuse de chlorure de sodium standard, à un pH qui correspond au pH du milieu réactionnel aqueux avant le début de l'addition du dispersant, une mobilité électrophorétique différente de zéro,

c) on ajoute à la dispersion aqueuse de particules de matière solide, avant le début de l'addition du mélange de monomères, au moins un dispersant anionique, cationique et non ionique,

d) puis on ajoute à la dispersion aqueuse de particules de matière solide 0,01 à 30 % en poids de la quantité totale du mélange de monomères et on polymérise jusqu'à un degré de conversion d'au moins 90 % et

e) à la suite de cela on ajoute en continu, en fonction de la consommation, la quantité restante du mélange de monomères, dans des conditions de polymérisation.

2. Procédé selon la revendication 1, **caractérisé en ce que** par rapport à 100 % en poids du mélange de monomères on utilise de 1 à 1 000 parties en poids de ladite au moins une matière solide inorganique finement divisée et **en ce qu'**ensuite, lorsque les particules de matière solide dispersées

a) présentent une mobilité électrophorétique à signe négatif, on utilise 0,01 à 10 parties en poids d'au moins un dispersant cationique, 0,01 à 100 parties en poids d'au moins un dispersant non ionique et au moins un dispersant anionique, dont la quantité doit être choisie de manière que le rapport d'équivalents du dispersant anionique au dispersant cationique soit supérieur à 1, ou
b) présentent une mobilité électrophorétique à signe positif, on utilise 0,01 à 10 parties en poids d'au moins un dispersant anionique, 0,01 à 100 parties en poids d'au moins un dispersant non ionique et au moins un dispersant cationique, dont la quantité doit être choisie de manière que le rapport d'équivalents du dispersant cationique au dispersant anionique soit supérieur à 1.

3. Procédé selon la revendication 2, **caractérisé en ce que**

a) dans le cas de la présence de particules de matière solide dispersées ayant une mobilité électrophorétique à signe négatif, on remplace une quantité partielle ou la quantité totale dudit au moins un dispersant anionique par la quantité équivalente d'au moins un monomère E qui comporte au moins un groupe acide et/ou son anion correspondant, et
b) dans le cas de la présence de particules de matière solide dispersées ayant une mobilité électrophorétique à signe positif, on remplace une quantité partielle ou la quantité totale dudit au moins un dispersant cationique par la quantité équivalente d'au moins un monomère F qui comporte au moins un groupe amino, amido, uréido ou N-hétérocyclique et/ou des dérivés ammonium protonés ou alkylés sur l'atome d'azote de tels groupes.

4. Procédé selon l'une quelconque des revendications 1 à 3, **caractérisé en ce que** ledit au moins un dispersant non ionique est ajouté avant ledit au moins un dispersant cationique et anionique.

5. Procédé selon l'une quelconque des revendications 1 à 4, **caractérisé en ce que** ladite au moins une matière solide inorganique est choisie dans le groupe comprenant le dioxyde de silicium, l'oxyde d'aluminium, l'oxyde d'hydroxyaluminium, le carbonate de calcium, le carbonate de magnésium, l'orthophosphate de calcium, l'orthophosphate de magnésium, l'oxyde de fer-(II), l'oxyde de fer(III), l'oxyde de fer(II/III), l'oxyde d'étain-(IV), l'oxyde de cérium-(IV), l'oxyde d'yttrium-(III), le dioxyde de titane, l'hydroxy-apatite, l'oxyde de zinc et le sulfure de zinc.

6. Procédé selon l'une quelconque des revendications 1 à 5, **caractérisé en ce que** ladite au moins une matière solide inorganique consiste en acide silicique colloïdal et/ou pyrogéné, un sol de silice et/ou un silicate lamellaire.

7. Procédé selon l'une quelconque des revendications 1 à 6, **caractérisé en ce que** comme au moins un monomère époxyde on utilise l'acrylate de glycidyle et/ou le méthacrylate de glycidyle.

8. Procédé selon l'une quelconque des revendications 1 à 7, **caractérisé en ce que** le mélange de monomères contient de 0,01 à 5 % en poids, par rapport à la quantité totale des monomères A, de monomères à insaturation éthylénique qui comportent un groupe siloxane.

9. Procédé selon l'une quelconque des revendications 1 à 8, **caractérisé en ce que** la quantité totale dudit au moins un monomère époxyde dans le mélange de monomères vaut de 0,1 à 5 % en poids.

10. Procédé selon l'une quelconque des revendications 1 à 9, **caractérisé en ce que** la composition des monomères A est choisie de manière qu'après la polymérisation de ces monomères seuls il en résulterait un polymérisat dont la température de transition vitreuse serait $\leq$ 60 °C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 325314 A
- WO 0118081 A
- US 3544500 A
- US 4421680 A
- US 4608401 A
- US 4981882 A
- EP 104498 A
- EP 505230 A
- EP 572128 A
- GB 2227739 A
- WO 0129106 A
- WO 03000760 A
- US 4269749 A
- US 5763629 A
- US 4157323 A


### In der Beschreibung aufgeführte Nicht-Patentliteratur


- **ZENG et al.** *Journal of Polymer Science: Part A: Polymer Chemistry,* vol. 42, 2253-2262
- **LONG et al.** *Tianjin Daxue Xuebao,* 1991, vol. 4, 10-15
- **BOURGEAT-LAMI et al.** *Die Angewandte Makromolekulare Chemie,* 1996, vol. 242, 105-122
- **PAULKE et al.** Synthesis Studies of Paramagnetic Polystyrene Latex Particles in Scientific and Clinical Applications of Magnetic Carriers. Plenum Press, 1997, 69-76
- **ARMES et al.** *Advanced Materials,* 1999, vol. 11 (5), 408-410
- **S. E. HARDING et al.** Analytical Ultracentrifugation in Biochemistry and Polymer Science. Royal Society of Chemistry, 1992
- **W. MÄCHTLE.** *Analysis of Polymer Dispersions with an Eight-Cell-AUC-Multiplexer: High Resolution Particle Size Distribution and Density Gradient Techniques,* 147-175
- **B. R. J. HUNTER.** Introduction to modern Colloid Science. Oxford University Press, 1993, 241-248
- **K. OKA ; K. FURUSAWA.** Electrical Phenomena at Interfaces, Surfactant Science Series. Marcel Dekker, 1998, vol. 76, 151-232
- **B. R. WARE ; W. H. FLYGARE.** *Chem. Phys. Lett.,* 1971, vol. 12, 81-85
- **E. MATIJEVIC.** *Chem. Mater.,* 1993, vol. 5, 412-426
- Ullmann's Encyclopedia of Industrial Chemistry. Verlag Chemie, 1992, vol. 23, 583-660
- **D. F. EVANS ; H. WENNERSTRÖM.** Colloidal Domain. Verlag Chemie, 1994, 363-405
- **R. J. HUNTER.** Foundations of Colloid Science. Clarendon Press, 1991, vol. I, 10-17
- **HOUBEN-WEYL.** Methoden der organischen Chemie, Band XIV/1, Makromolekulare Stoffe. Georg-Thieme-Verlag, 1961, vol. XIV/1, 411-420
- **HOUBEN-WEYL.** Methoden der organischen Chemie, Band XIV/1, Makromolekulare Stoffe. Georg-Thieme-Verlag, 1961, vol. XIV/1, 192-208
- **H. STACHE.** Tensid-Taschenbuch. Carl-Hanser-Verlag, 1981
- **MCCUTCHEON'S.** Emulsifiers & Detergents. MC Publishing Company, 1989
- **T. G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Encyclopedia of Industrial Chemistry. Verlag Chemie, 1992, vol. A21, 169
- **B. J. BRANDRUP ; E. H. IMMERGUT.** Polymer Handbook. J. Wiley, 1966
- POLYMER HANDBOOK. J. Wiley, 1975
- POLYMER HANDBOOK. J. Wiley, 1989
- **J. BRANDRUP ; E. H. IMMERGUT.** Polymerhandbook. John Weley & Sons, 1989, 133-141
- **B. K. MOSBACH ; L. ANDERSSON.** *Nature,* 1977, vol. 270, 259-261
- **P. L. KRONICK.** *Science,* 1978, vol. 200, 1074-1076